# EUROPEAN PATENT APPLICATION

(11) **EP 1 872 936 A2**
(43) Date of publication of application: **02.01.2008**
(21) Application number: 07010353.6
(22) Date of filing: 24.05.2007
(51) Int. Cl.: B32B 15/08, B32B 27/36

(54) **Stainless steel sheet with scratchproof, dirt-repellent coating sheet and method of producing same**

(30) Priority: 28.06.2006 IT MI20061255
(71) Applicant: PLALAM S.P.A., 20131 Milano (MI) (IT)
(72) Inventor: Robbiati, Pasquale, 20044 Bernareggio (Milano) (IT)
(74) Representative: Petruzziello, Aldo

(57) **Abstract**

A bonded metal sheet (1) comprising a base of sheet metal (2) and a sheet of plastic material (6) on at least one surface thereof, wherein said sheet of plastic material (6) comprises a heat-sealing layer (6B) adapted to be fixed integrally to the sheet metal (2) without the use of external cohesion means.

## Description

The present invention relates to a stainless steel sheet with a scratchproof, dirt-repellent coating sheet and a method of producing same. This type of sheet is particularly suitable for use as cladding in the building or furniture sectors.

With reference to Figure 3, Italian patent No. 1.295.882 discloses a sheet or plate 101 which comprises a layer of ferritic stainless steel 102 and a film 106 bonded thereto by means of glue 105. Patent No. 1.295.882 further describes a method of producing said bonded sheet 101 by gluing of the film 106. The film 106 is of plastic material, in particular a polyvinyl polyester polymerised with UV lamps.

With said invention, if on the one hand the need for strong materials with an increasingly good appearance for cladding, for example for building, furniture or the like, has been solved, on the other hand the problems relating to the method of making said polyester layer adhere remain unsolved. In fact, the prior art provides for a process of spreading a glue on a metal plate: said spreading process is a delicate operation, and surface impurities may be present in the form of dust or other contaminating agents which can contaminate the solvents which together with the resins go to form the glues. Said generic contaminants thus determine a likelihood of waste of finished product, which is obviously undesirable. Furthermore, the glue spreading process is a complex procedure, which takes place at a certain temperature; therefore it is necessary to use ovens to heat the solvents, the use of resins and possibly of elements such as mixers or similar systems for preparation of the glue, and suitable spreading heads. All this, as is readily understandable, gives rise to a series of complexities which translate into higher costs for the manufacturing stage of the coated stainless sheet.

Object of the present invention is therefore to overcome the drawbacks of the prior art by providing a stainless steel product in a plate or sheet with a pleasing appearance and a surface that withstands scratching and dirt which can be constructed with a cheap, relatively simple industrial process.

It is also an object of the present invention to provide a manufacturing method for a stainless steel sheet bonded to a protective film that does not involve the use of a cohesion means spread on the stainless steel sheet for fixing of the protective film.

Another object of the present invention is to eliminate the problems of the prior art relating to the presence of production waste.

Another object of the present invention is to eliminate the use of solvents and chemical products of similar dangerousness and toxicity.

These objects are achieved in accordance with the invention with the characteristics listed in appended independent claims 1 and 9.

Advantageous embodiments of the invention are apparent from the dependent claims.

Experts in the field shared the opinion that it was not possible to apply the film of plastic material to the stainless steel plate unless a cohesion means such as glue was used.

Surprisingly, however, a series of tests performed with commercially available materials able to form a coating that was effectively anti-scratch and dirt-repellent have led to the discovery that the use of a typical packaging material, such as co-extruded polyester, could ensure both the required protective characteristics and elimination of the delicate glue spreading stage.

In fact, by using said co-extruded polyester film, it is no longer necessary to resort to spreading of a liquid glue and fixing of the film on the stainless steel plate takes place exclusively through the effect of mechanical pressure at a certain temperature, that is, through a simple calendering operation.

The choice of co-extruded polyester was made by searching for a film that had the properties of being weldable (heat-sealing) and at the same time able to ensure the appropriate protective properties. Polyester is not a weldable material, but there exists on the market a polyester which is extruded with a layer of amorphous polyester which confers on the film thus obtained the necessary characteristics of heat-sealing ability.

This type of co-extruded polyester is typically used both in the packaging sector, where the edges of the film are joined together to form a closed bag, and in the video tape sector.

In a preferred configuration, the co-extruded polyester has a layer of about 9 micron of polyester to which a layer of about 1 micron of amorphous polyester is bonded by successive extrusion procedures. A process of heating to about 220-250°C allows the crystal structure of the amorphous structure to be broken, allowing it to become weldable. Since the manufacturing procedure of the coated stainless steel plate of the prior art involves pre-heating of said sheet to a temperature ranging from 220 to 250 °C, thus close to the melting temperature of the amorphous polyester, it has surprisingly been discovered that said temperature can be used to melt the layer of amorphous polyester, thus eliminating the stage of spreading glue on the steel plate, and allowing the co-extruded polyester film to adhere perfectly to the stainless steel plate only by means of a calendering operation.

Object of the present invention is a plate article comprising a layer of stainless steel sheet and a layer of plastic film applied to the sheet by means of a bonding operation under pressure: the sheet passes through a series of rollers until it forms a continuous sheet together with the co-extruded polyester film, which is gradually cooled and cut to the desired sizes. This calendering process, through an optimal combination of temperature and pressure, ensures complete, perfect adherence of the plastic film on the surface of the stainless steel sheet.

Said plastic film is a commercially available co-extruded polyester used in the packaging sector, comprising a layer of amorphous polyester having a crystal structure that can be broken at a temperature ranging from 220° to 250 °C.

The present invention also refers to a manufacturing method for said bonded stainless steel plate which comprises the following steps:
- pre-heating of the stainless steel plate to a temperature of about 250 °C,
- application through a calendering operation of a co-extruded polyester film, and
- subsequent cooling in water to room temperature of the product thus obtained.

The method of obtaining said bonded stainless steel sheet and the composition thereof confer upon the bonded stainless steel plate according to the subject matter of the present invention a series of advantages with respect to bonded stainless steel plates of the prior art:
- lower production costs, since the manufacturing process is simplified by elimination of the glue spreading operation; and
- less production waste since the operation of applying the polyester film under pressure does not involve the use of glues, which can be contaminated by dust.

Further characteristics of the invention will be made clearer by the detailed description that follows, referring to a purely exemplifying and therefore non-limiting embodiment thereof, illustrated in the appended drawings, in which:
Figure 1 is a diagrammatic perspective view showing a portion of bonded stainless steel sheet and the layers of which it is composed;
Figure 1A is an enlarged scrap view of a piece of co-extruded polyester film according to the detail A of Fig. 1;
Figure 2 is a block diagram showing the manufacturing method for a sheet of bonded stainless steel plate;
Figure 3 is a diagrammatic perspective view showing a portion of bonded stainless steel plate and the layers of which it is composed according to the prior art.

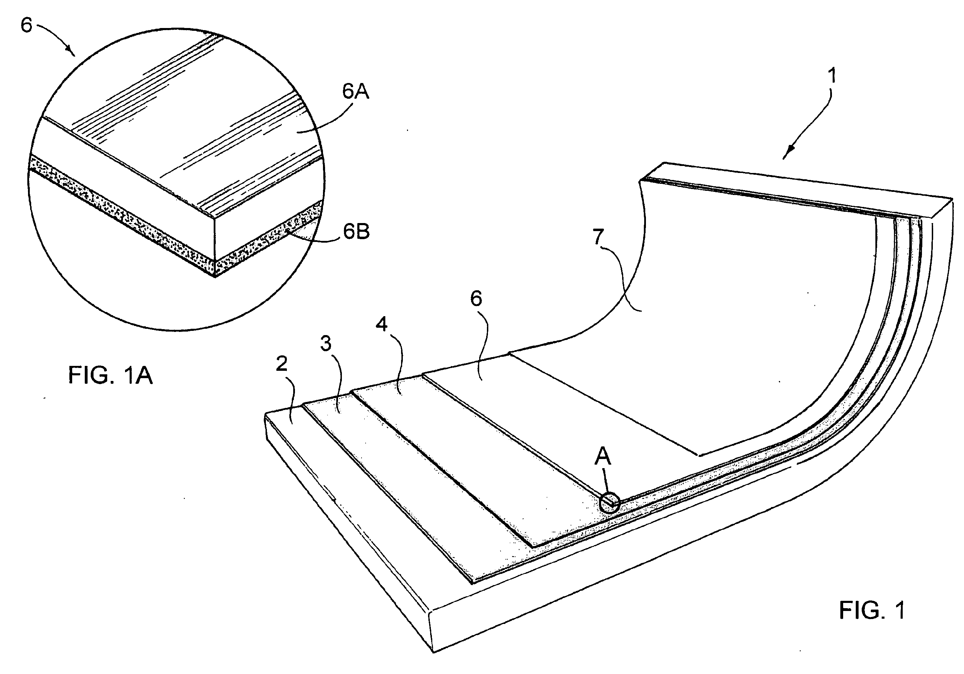

In Figure 1 a bonded stainless steel plate 1 comprising a layer 2 of a sheet of ferritic stainless steel is illustrated. Said ferritic stainless steel is typically used to produce washbasins, sinks and finishes for the building sector. The same material, in the form of thin sheets, is used for cladding, plates for ship decks, etc.

Returning to Figure 1, said stainless steel plate 2 is chemically treated so that a surface layer 3 is formed thereon adapted to ensure certain mechanical characteristics of resistance to corrosion. Said layer 3 is subjected to a surface finish which can consist of polishing or brushing, depending upon whether the desired aesthetic effect is polished or satin, so as to form a finished surface layer 4. Lastly, a layer 6 of a co/extruded polyester film is applied under pressure. The bonded sheet 1 thus formed can optionally be coated with a protective film 7 to save the surface from scratches and marks due to movement and transport.

As shown in Figure 1A, the film 6 is formed by a layer 6A of polyester and a layer 6B of amorphous polyester made integral with each other by successive extrusion operations.

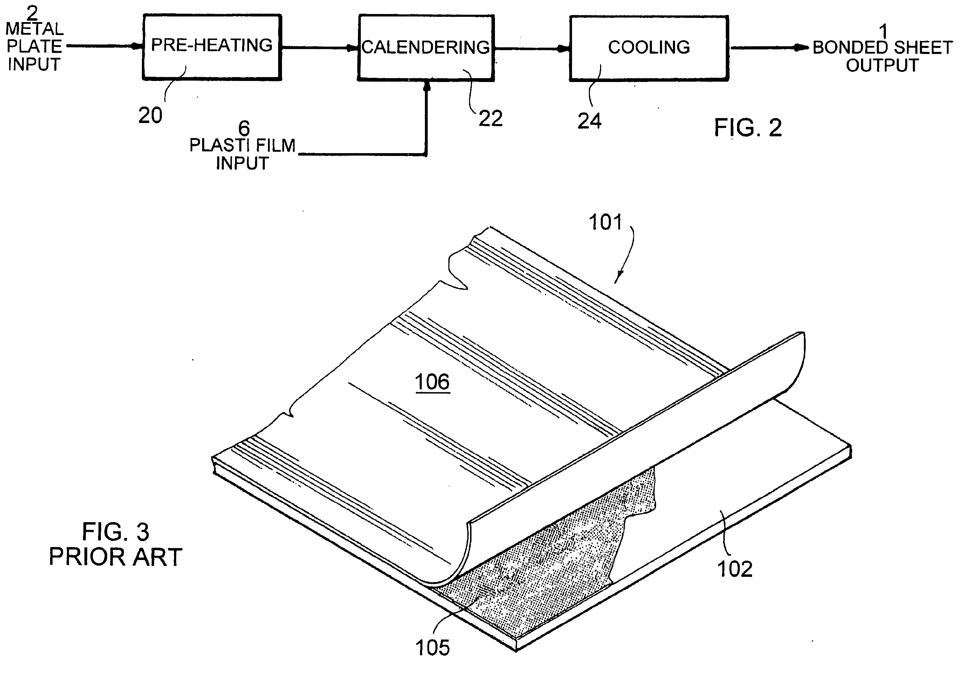

As shown better in Figure 2, the block diagram of the production method for the bonded stainless steel sheet comprises a preheating stage 20 in which a sheet of stainless steel 2 is pre-heated, by passing it in air ovens, to a temperature of about 250°C. A film 6 is applied to the stainless steel sheet at this temperature, by means of successive passes between heated rolls or calenders, which press the two layers evenly together so as to from a single bonded sheet. On leaving the calenders, the bonded sheet thus obtained is brought to room temperature by forced cooling 24 in water to obtain finally a sheet 1 of stainless steel bonded to a polyester film with the desired aesthetic properties and resistance to scratches and dirt.

Numerous changes or modifications of detail within the reach of a person skilled in the art can be made to the present embodiment of the invention without departing from the scope of the invention as set forth in the appended claims.

## Claims

1. A bonded metal sheet (1) comprising a base of sheet metal (2) and a sheet of plastic material (6) on at least one surface thereof, **characterised in that** said sheet of plastic material (6) comprises a heat-sealing layer (6B) adapted to be fixed integrally to the sheet metal (2) without the use of external cohesion means.

2. A bonded metal sheet (1) according to claim 1 **characterised in that** said plastic material (6) is a co-extruded polyester film, typically used in the packaging sector.

3. A bonded metal sheet (1) according to claim 1 or 2, **characterised in that** said heat-sealing layer (6B) consists of an amorphous polyester.

4. A bonded metal sheet (1) according to claims 2 and 3 **characterised in that** said co-extruded polyester (6) comprises a polyester layer (6A) accounting for 9/10 and an amorphous polyester layer (6B) accounting for 1/10.

5. A bonded metal sheet (1) according to claims 3 or 4 **characterised in that** said layer of amorphous polyester (6B) possesses a crystal layer which breaks at 250°C permitting heat-sealing of said film.

6. A bonded metal sheet (1) according to any one of the preceding claims, **characterised in that** said metal sheet (2) is of stainless steel.

7. A bonded metal sheet (1) according to claim 6, **characterised in that** said stainless steel sheet (2) comprises a surface layer (3) which is treated chemically.

8. A bonded metal sheet (1) according to claim 6 or 7, **characterised in that** said stainless steel sheet (2) comprises a surface layer (4) which is brushed or polished in order to obtain a satin or polished surface, respectively.

9. A manufacturing method for a sheet (1) comprising a metal sheet (2) bonded to a film of plastic material (6) on at least one surface thereof, the method comprising the following stages:
- pre-heating (20) of the metal sheet (2),
- bonding under pressure (22) of said film of plastic material (6) onto the metal sheet (2), and
- cooling (24) of the bonded sheet (1) to room temperature.

10. A manufacturing method for a bonded metal sheet (1) according to claim 9, **characterised in that** said plastic material is a co-extruded polyester (6) comprising a layer of amorphous polyester (6B), and said pre-heating (20) takes place at a temperature such as to break the crystal structure of said amorphous polyester (6B).

11. A manufacturing method for a bonded metal sheet (1) according to claim 9 or 10, **characterised in that** said pre-heating step takes place at a temperature of 250°C.

12. A manufacturing method for a bonded metal sheet (1) according to any one of claims 9 to 11, **characterised in that** said stage of bonding under pressure (22) is a calendering stage.

13. A manufacturing method for a bonded metal sheet (1) according to claim 12, **characterised in that** said calendering allows said film of co-extruded polyester (6) to adhere perfectly to the stainless steel sheet (2) without the use of glue.

14. A manufacturing method for a bonded metal sheet (1) according to any one of claims 9 to 13, **characterised in that** said stage of cooling (24) takes place in a forced manner by means of a water bath until room temperature is reached.
